# EUROPEAN PATENT APPLICATION

(11) **EP 4 679 724 A1**
(43) Date of publication of application: **14.01.2026**
(21) Application number: 23925668.8
(22) Date of filing: 03.03.2023
(51) Int. Cl.: H04B 7/0456

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/079667
(87) International publication number: WO 2024/182942

(57) **Abstract**

The present disclosure relates to a communication method and apparatus, and a storage medium. The method comprises: reporting a terminal capability, wherein a terminal supports uplink simultaneous transmission via multi-panel (STxMP), the terminal capability is used for a network device to configure and/or schedule a transmission parameter for the terminal, and the transmission parameter comprises a transmission scheme and/or precoding information. The present disclosure provides the related terminal capability definition and reporting method in STxMP.

## Description

### FIELD

The present disclosure relates to the field of communication technologies, and in particular relates to a communication method, a communication apparatus, and a storage medium.

### BACKGROUND

The uplink enhancement of Rel-18 of the 3rd generation partnership project (3GPP) new radio (NR) aims to support higher uplink throughput and more reliable transmission performance by the enhancement of an uplink simultaneous transmission via multi-panels/multiple-transmission reception points (M-TRPs).

Currently, in a simultaneous transmission via multi-panels (ST×MP), how to implement indication schemes of different precoding information in different transmission modes to adapt to different terminal implementation and configuration requirements is a problem that needs to be solved.

### SUMMARY

In order to overcome the problems existing in the related art, the present disclosure provides a communication method, a communication apparatus, and a storage medium.

According to a first aspect of embodiments of the present disclosure, there is provided a communication method, performed by a terminal and including: reporting a terminal capability, where the terminal supports an uplink ST×MP transmission, the terminal capability is used by a network device to configure and/or schedule a transmission parameter for the terminal, and the transmission parameter inlcudes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of multiple-input multiple-output (MIMO) layers supported by the terminal for a communication based on a single-transmission reception point (S-TRP).

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, before reporting the terminal capability, the method further includes: determining that a maximum number of sounding reference signal (SRS) ports corresponding to the corresponding panel of the terminal for the communication based on the S-TRP is inconsistent with a maximum number of transmission data layers corresponding to the panel.

In an implementation, the terminal capability includes a numeric count of MIMO layers supported by the terminal under a multiple-transmission reception point (M-TRP) that matches the transmission scheme.

In an implementation, the numeric count of MIMO layers supported by the terminal under the M-TRP that matches the transmission scheme includes a maximum number of MIMO layers supported by the terminal in a space division multiplexing (SDM) transmission, and/or a maximum number of MIMO layers supported by the terminal in a single frequency network (SFN) transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

According to a second aspect of embodiments of the present disclosure, there is provided a communication method, performed by a network device and including: receiving a terminal capability; and configuring and/or scheduling a transmission parameter for a terminal based on the terminal capability, where the terminal supports an uplink ST×MP transmission, and the transmission parameter includes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of MIMO layers supported by the terminal for a communication based on an S-TRP.

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, the terminal capability includes a numeric count of MIMO layers supported by the terminal under an M-TRP that matches the transmission scheme.

In an implementation, the numeric count of MIMO layers supported by the terminal under the M-TRP that matches the transmission scheme includes a maximum number of MIMO layers supported by the terminal in an SDM transmission, and/or a maximum number of MIMO layers supported by the terminal in an SFN transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

According to a third aspect of embodiments of the present disclosure, there is provided a communication apparatus, configured in a terminal and including a processing module. The processing module is configured to report a terminal capability, where the terminal supports an uplink ST×MP transmission, the terminal capability is used by a network device to configure and/or schedule a transmission parameter for the terminal, and the transmission parameter includes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of MIMO layers supported by the terminal for a communication based on an S-TRP.

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, before the terminal capability is reported, the communication apparatus further includes: a processing module configured to determine that a maximum number of SRS ports corresponding to the corresponding panel of the terminal for the communication based on the S-TRP is inconsistent with a maximum number of transmission data layers corresponding to the panel.

In an implementation, the terminal capability includes a numeric count of MIMO layers supported by the terminal under an M-TRP that matches the transmission scheme.

In an implementation, the numeric count of MIMO layers supported by the terminal under the M-TRP that matches the transmission scheme includes a maximum number of MIMO layers supported by the terminal in an SDM transmission, and/or a maximum number of MIMO layers supported by the terminal in an SFN transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

According to a fourth aspect of embodiments of the present disclosure, there is provided a communication apparatus, configured in a network device and including a receiving module and a processing module. The receiving module is configured to receive a terminal capability. The processing module is configured to configure and/or schedule a transmission parameter for a terminal based on the terminal capability, where the terminal supports an uplink ST×MP transmission, and the transmission parameter includes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of MIMO layers supported by the terminal for a communication based on an S-TRP.

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, the terminal capability includes a numeric count of MIMO layers supported by the terminal under an M-TRP that matches the transmission scheme.

In an implementation, the numeric count of MIMO layers supported by the terminal under the M-TRP that matches the transmission scheme includes a maximum number of MIMO layers supported by the terminal in an SDM transmission, and/or a maximum number of MIMO layers supported by the terminal in an SFN transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

The technical solution provided in the embodiments of the present disclosure may include the following advantageous effects. By determining that the terminal supports the uplink ST×MP transmission, reporting the terminal capability, defining the terminal capability in an uplink physical uplink shared channel (PUSCH) transmission, and setting a relevant method for reporting the terminal capability, the network device may better configure and/or schedule transmission resources for the terminal and perform precoding indications, thereby enabling the uplink PUSCH transmission to support higher transmission rate and throughput.

It is to be understood that both the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a schematic diagram illustrating a multi-path multiple-transmission reception point (MP-MTRP) transmission scenario scheduled by single-downlink control information (S-DCI) according to an illustrative embodiment.
FIG. 3 is a schematic diagram illustrating an MP-MTRP transmission scenario scheduled by multiple-downlink control information (M-DCI) according to an illustrative embodiment.
FIG. 4 is a flow chart illustrating a communication method according to an illustrative embodiment.
FIG. 5 is a flow chart illustrating a communication method according to an illustrative embodiment.
FIG. 6 is a flow chart illustrating a communication method according to an illustrative embodiment.
FIG. 7 is a block diagram illustrating a communication apparatus according to an illustrative embodiment.
FIG. 8 is a block diagram illustrating a communication apparatus according to an illustrative embodiment.
FIG. 9 is a block diagram illustrating a communication device according to an illustrative embodiment.
FIG. 10 is a block diagram illustrating a communication device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

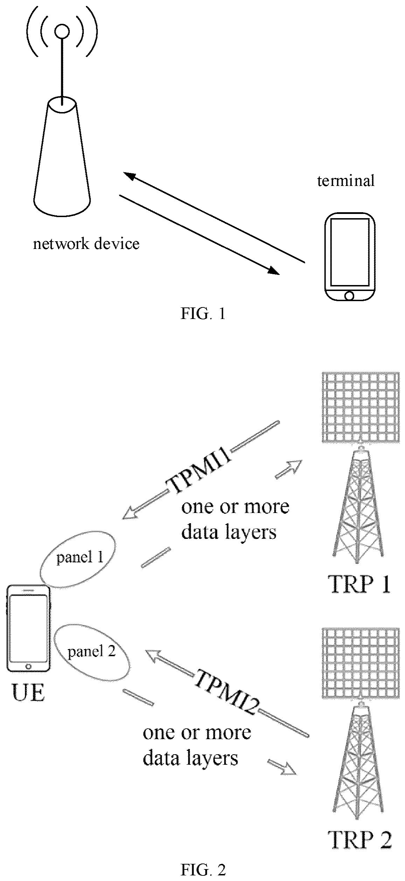

A communication method provided in the embodiments of the present disclosure may be performed by a wireless communication system illustrated in FIG. 1. Referring to FIG. 1, the wireless communication system may include a network device and a terminal. The terminal is connected to the network device via wireless resources, and performs data transmissions with the network device via the wireless resources.

It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The networks may be divided into a 2nd generation (2G) network, a 3G network, a 4G network, or a future evolution network, such as a 5th generation wireless communication system (5G) network, which may also be referred to as an NR network, according to the capacity, rate, delay, and other factors of different networks. For ease of description, a wireless communication network will be sometimes abbreviated as a network in the present disclosure.

Further, the network device involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a 5G base station (a next generation node B, abbreviated as gNB) in an NR system, or may also be a component or a part of a device that constitutes a base station, or the like. It is to be understood that the specific technology and specific device form adopted by the network device are not limited in the embodiments of the present disclosure. In the present disclosure, the network device may provide communication coverage for a specific geographical area, and may communicate with a terminal located within the coverage area (cell). In addition, the network device may also be a vehicle-mounted device when it is used in a vehicle to everything (V2X) communication system.

Further, the terminal involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a customer premise equipment (CPE), a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the present disclosure, the data transmission between a network device and a terminal is performed based on beams. The physical uplink shared channel (PUSCH) uplink transmission between the network device and the terminal may be enhanced based on M-TRPs/multi-panels. Specifically, the uplink transmission scheme of the PUSCH includes an M-TRP/multi-panel transmission scheme and an S-TRP transmission scheme. The M-TRP/multi-panel transmission scheme includes a space division multiplexing (SDM) transmission scheme or a single frequency network (SFN) transmission scheme.

The uplink PUSCH transmission is directed towards TRPs of multiple base stations. For example, in a coordinated transmission under a time division multiplexing (TDM) transmission mode, different repetitions of the same information on the PUSCH are sent to different TRPs of a base station via different transmission occasions (TOs) in a time domain. This procedure has relatively low requirements on terminal capabilities and does not require the capability of supporting simultaneous beam transmissions. In addition, the transmission delay is relatively large.

For the uplink, PUSCH channels facing different panels/TRPs/TCIs may actually pass through channels with very different spatial characteristics. Therefore, it is considered that quantum cascade lasers-distributed (QCLs-D) of PUSCH channels in different transmission directions are different.

In a codebook-based PUSCH transmission, the network device determines a transmission precoding matrix indicator (TPMI) and a rank indicator (RI) used by the terminal for an actual transmission, and notifies them to the terminal. Data from the terminal in the subsequent uplink transmission needs to be precoded using the TPMI and RI specified by the network device. At the same time, the precoded data is mapped to the corresponding antenna port according to spatial relation information (Spatial Relation Info, abbreviated as SRI) corresponding to a sounding reference signal (SRS) resource indicated by the SRI.

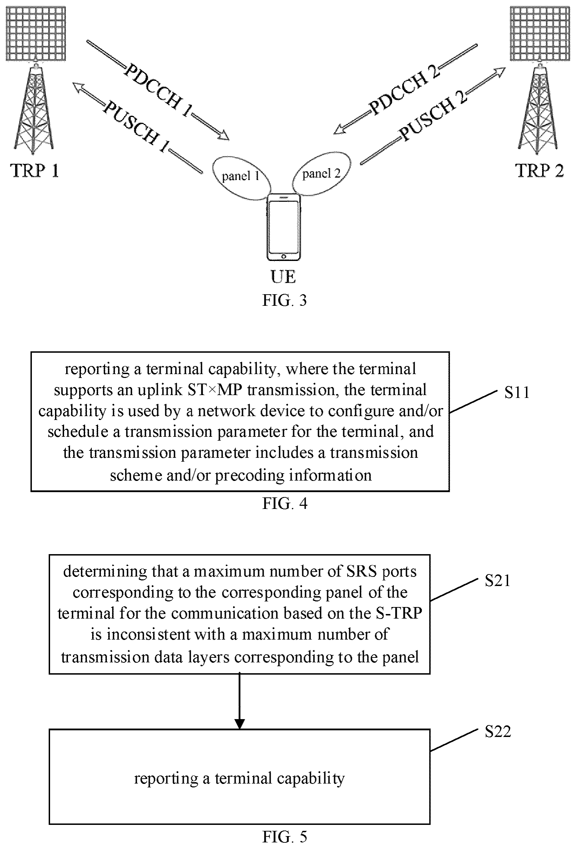

By the PUSCH enhancement based on the M-TRP, multi-panel/TRP transmissions may be scheduled based on a single physical downlink control channel (PDCCH), such as single downlink control information (S-DCI). FIG. 2 shows a schematic diagram of an MP-MTRP transmission scenario scheduled by S-DCI. As shown in FIG. 2, the terminal UE sends TPMI1 to TRP 1 on panel 1, and sends TPMI2 to TRP 2 on panel 2. It is also possible to schedule multi-panel/TRP transmissions based on different PDCCHs, such as multiple downlink control information (M-DCI). FIG. 3 shows a schematic diagram of an MP-MTRP transmission scenario scheduled by M-DCI.

For uplink synchronous transmission of multiple panels, the coordinated transmission scheduling of a transport block (TB) of a PUSCH based on S-DCI includes multiple different transmission schemes. Each transmission scheme is briefly described below.

One scheme is an SDM transmission scheme. A TB of a PUSCH is sent to two different TRPs on the same time-frequency resource via the respective modulation reference signal (DMRS) ports or port combinations allocated on different panels. Different panels/TRPs/TOs are associated with different transmission configuration indicator (TCI) states, i.e., beams. On this basis, the SDM transmission scheme is further divided into two types, SDM-A and SDM-B. In SDM-A, different portions of a TB of a PUSCH are sent to two different TRPs on the same time-frequency resource via the respective DMRS ports or port combinations allocated on different panels. Different panels/TRPs/TOs are associated with different TCI states, i.e., beams. In SDM-B, the repetitions of the same TB of a PUSCH corresponding to different random variable (RV) versions are sent to two different TRPs on the same time-frequency resource via the respective DMRS ports or port combinations allocated on different panels. Different panels/TRPs/TOs are associated with different TCI states, i.e., beams.

Another scheme is an SFN transmission scheme. A TB of a PUSCH is sent to two different TRPs on the same time-frequency resource via the same DMRS port or port combination allocated on different panels. Different panels/TRPs/TOs are associated with different TCI states, i.e., beams.

For the uplink PUSCH simultaneous transmission based on multiple panels of the terminal, one or more of the above solutions may be supported.

A terminal is generally configured with multiple physical panels, and the capabilities of different panels may also vary. For example, different panels may have different numbers of SRS ports and support different maximum RIs. A network scheduler determines whether the terminal is currently suitable for a multi-panel ST×MP transmission. If yes, the network device directly or indirectly indicates the related transmission resources, such as specific beam indication information of the terminal or the number of data layers used for the transmission, as well as precoding indication information and the like.

The present disclosure provides a communication method for reporting a terminal capability. By defining the terminal capability in a PUSCH transmission and setting a relevant method for reporting the terminal capability, the network device may better configure and/or schedule a transmission parameter for the terminal, support a multi-panel transmission mechanism of the terminal, and ensure the flexibility of the terminal, thereby enabling the PUSCH transmission to support higher transmission rate and throughput.

The transmission parameter involved in the embodiments of the present disclosure includes a transmission scheme, and may also include precoding information. The transmission scheme includes a multi-panel/M-TRP transmission scheme, and may also include an S-TRP transmission scheme. The multi-panel/M-TRP transmission scheme includes an SDM transmission scheme or an SFN transmission scheme. The precoding information may include a TPMI and/or SRI.

For the scheduled PUSCH and the configured grant (CG) PUSCH of type 2, the precoding information is indicated by the DCI; and for the CG PUSCH of type 1, the precoding information is configured by a radio resource control (RRC) signaling.

FIG. 4 is a flow chart illustrating a communication method according to an illustrative embodiment. As shown in FIG. 4, the communication method is performed by a terminal, and includes the following step.

At step S11, a terminal capability is reported, where the terminal supports an uplink ST×MP transmission, the terminal capability is used by a network device to configure and/or schedule a transmission parameter for the terminal, and the transmission parameter includes a transmission scheme and/or precoding information.

In an example, the terminal capability may be used by the network device to configure the transmission parameter for the terminal, may be used by the network device to schedule the transmission parameter for the terminal, and may also be used by the network device to simultaneously configure the transmission parameter and schedule the transmission parameter for the terminal. For example, the terminal capability is used by the network device to configure a transmission scheme for the terminal, or to configure precoding information for the terminal, or to configure a transmission scheme and precoding information for the terminal. Alternatively, the terminal capability is used by the network device to schedule a transmission scheme for the terminal, or to schedule precoding information for the terminal, or to schedule a transmission scheme and precoding information for the terminal. Alternatively, the terminal capability is used by the network device to configure a transmission scheme and schedule a transmission scheme for the terminal, or to configure precoding information and schedule precoding information for the terminal.

In an example, if the terminal is currently suitable for the uplink ST×MP transmission and simultaneous scheduling, the terminal may report the terminal capability to the network device. After receiving the terminal capability, the network device directly or indirectly indicates a related transmission based on the reported terminal capability. The related transmission includes specific beam indication information of the terminal, the number of transmission data layers used for the transmission, the allocation of DMRS ports used, precoding indication information, and the like.

In the communication method provided in an embodiment of the present disclosure, the terminal capability includes a numeric count of panels supported by the terminal.

In some embodiments, the numeric count of panels supported by the terminal includes a maximum number of panels supported by the terminal for simultaneous activation, and/or a maximum number of panels supported by the terminal for the uplink ST×MP transmission.

In an example, when the terminal supports the uplink ST×MP transmission, the terminal reports the maximum number of panels supported by the terminal for simultaneous activation to the network device, so that the network device may determine the panels that may be activated when performing the PUSCH communication. Alternatively, when the terminal supports the uplink ST×MP transmission, the terminal reports the maximum number of panels supported by the terminal for the uplink ST×MP transmission to the network device, so that the network device may determine the panels that may be used for the uplink simultaneous transmission when performing the PUSCH communication. Alternatively, when the terminal supports the uplink ST×MP transmission, the terminal may simultaneously report to the network device the maximum number of panels supported by the terminal for simultaneous activation and the maximum number of panels supported by the terminal for the uplink ST×MP transmission, so that the network device may distinguish between panels that are only suitable for receiving data, panels that are only suitable for sending data, and panels that are suitable for receiving and sending data when performing the PUSCH communication, and determine the combination of multiple panels that may be used.

In an example, when it is configured that the maximum number of panels supported by the terminal is 4, and the number of panels actually supported by the terminal for simultaneous activation is 2, in case that the terminal supports the uplink ST×MP transmission, the terminal may report to the network device that the number of panels currently supported for simultaneous activation is 2.

In an example, when it is configured that the maximum number of panels supported by the terminal is 4, and the maximum number of panels actually supported by the terminal for the ST×MP transmission is 1, in case that the terminal supports the uplink ST×MP transmission, the terminal may report to the network device that the maximum number of panels currently supported for the ST×MP transmission is 1.

In an example, when it is configured that the maximum number of panels supported by the terminal is 4, the number of panels actually supported by the terminal for simultaneous activation is 2, and the maximum number of panels actually supported by the terminal for the ST×MP transmission is 1, in case that the terminal supports the uplink ST×MP transmission, the terminal may report to the network device that the number of panels currently supported for simultaneous activation is 2 and the maximum number of panels currently supported for the ST×MP transmission is 1.

In the embodiments of the present disclosure, the terminal reports the number of panels supported by the terminal to the network device, and thus the network device may determine the combination of multiple panels suitable for the ST×MP transmission, thereby better supporting the network device to configure and schedule the transmission parameter, and ensuring the flexibility of the terminal, so that the PUSCH transmission supports higher transmission rate and throughput.

In the communication method provided in an embodiment of the present disclosure, the terminal capability includes a numeric count of MIMO layers supported by the terminal for a communication based on an S-TRP.

In some embodiments, the numeric count of MIMO layers includes a maximum number of MIMO layers supported by the terminal for the communication based on the S-TRP, and/or a minimum number of MIMO layers supported by the terminal for the communication based on the S-TRP.

In an example, when the terminal supports the uplink ST×MP transmission, the terminal reports to the network device the maximum number of MIMO layers supported by the terminal for the communication based on the S-TRP. Alternatively, when the terminal supports the uplink ST×MP transmission, the terminal may report to the network device the minimum number of MIMO layers supported by the terminal for the communication based on the S-TRP. Alternatively, when the terminal supports the uplink ST×MP transmission, the terminal may simultaneously report to the network device the maximum number of MIMO layers and the minimum number of MIMO layers supported by the terminal for the communication based on the S-TRP.

In an example, if the maximum number of MIMO layers supported by the terminal for the communication based on the S-TRP is 2, 3 or 4, when the terminal supports the uplink ST×MP transmission, the terminal reports to the network device that the maximum number of MIMO layers supported by the terminal for the communication based on the S-TRP is 4. Alternatively, the terminal reports to the network device that the minimum number of MIMO layers supported by the terminal for the communication based on the S-TRP is 2. Alternatively, the terminal simultaneously reports to the network device that the maximum number of MIMO layers supported by the terminal for the communication based on the S-TRP is 4 and the minimum number of MIMO layers is 2.

In other embodiments, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an example, when the terminal supports the uplink ST×MP transmission, the terminal may report to the network device the maximum number of MIMO layers supported by a corresponding panel of the terminal for the communication based on the S-TRP. Alternatively, when the terminal supports the uplink ST×MP transmission, the terminal may report to the network device the minimum number of MIMO layers supported by a corresponding panel of the terminal for the communication based on the S-TRP. Alternatively, when the terminal supports the uplink ST×MP transmission, the terminal may report to the network device the maximum number of MIMO layers supported by a corresponding panel of the terminal for the communication based on the S-TRP, and the minimum number of MIMO layers supported by a corresponding panel of the terminal for the communication based on the S-TRP.

In an example, if the number of MIMO layers simultaneously supported by a corresponding panel of the terminal for the communication based on the S-TRP is 2, 3 or 4, when the terminal supports the uplink ST×MP transmission, the terminal reports to the network device that the maximum number of MIMO layers supported by the corresponding panel of the terminal for the communication based on the S-TRP is 4. Alternatively, the terminal reports to the network device that the minimum number of MIMO layers supported by the corresponding panel of the terminal for the communication based on the S-TRP is 2. Alternatively, the terminal simultaneously reports to the network device that the maximum number of MIMO layers supported by the corresponding panel of the terminal for the communication based on the S-TRP is 4 and the minimum number of MIMO layers supported by the corresponding panel of the terminal for the communication based on the S-TRP is 2.

In yet other embodiments, the numeric count of MIMO layers includes at least one of: the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, or the minimum number of MIMO layers supported by the corresponding panel of the terminal for the communication based on the S-TRP.

For example, the numeric count of MIMO layers includes the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, and the minimum number of MIMO layers supported by the corresponding panel of the terminal for the communication based on the S-TRP.

Alternatively, for example, the numeric count of MIMO layers includes the maximum number of MIMO layers supported by the terminal for the communication based on the S-TRP, and the maximum number of MIMO layers supported by the corresponding panel of the terminal for the communication based on the S-TRP.

Still alternatively, for example, the numeric count of MIMO layers includes the minimum number of MIMO layers supported by the terminal for the communication based on the S-TRP, and the minimum number of MIMO layers supported by the corresponding panel of the terminal for the communication based on the S-TRP.

The above is only an illustrative explanation. In the embodiments of the present disclosure, the numeric count of MIMO layers may include one or a combination of more of the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, and the minimum number of MIMO layers supported by the corresponding panel of the terminal for the communication based on the S-TRP mentioned above, which are not listed one by one here.

In the embodiments of the present disclosure, the terminal reports the numeric count of MIMO layers supported by the terminal to the network device, thus enabling the network device to determine the situation suitable for the ST×MP transmission, better supporting the network device to configure and schedule the transmission parameter, and ensuring the flexibility of the terminal, so that the PUSCH transmission supports higher transmission rate and throughput.

When the numeric count of MIMO layers includes the maximum number of MIMO layers supported by the corresponding panel of the terminal for the communication based on the S-TRP, and/or the minimum number of MIMO layers supported by the corresponding panel of the terminal for the communication based on the S-TRP, the terminal may also determine that a maximum number of SRS ports corresponding to the corresponding panel of the terminal for the communication based on the S-TRP is inconsistent with a maximum number of transmission data layers corresponding to the panel. As shown in FIG. 5, FIG. 5 is a flow chart illustrating a communication method according to an illustrative embodiment, which includes the following steps.

At step S21, it is determined that a maximum number of SRS ports corresponding to the corresponding panel of the terminal for the communication based on the S-TRP is inconsistent with a maximum number of transmission data layers corresponding to the panel.

At step S22, a terminal capability is reported.

In an example, if the maximum number of SRS ports corresponding to each panel reported by the terminal is inconsistent with the number of transmission data layers corresponding to the panel, the terminal has not reported the maximum number of layers actually supported by the terminal when performing the communication based on the S-TRP to the network device. The terminal reports to the network device the maximum number of MIMO layers supported by the corresponding panel of the terminal for the communication based on the S-TRP, and/or the minimum number of MIMO layers supported by the corresponding panel of the terminal for the communication based on the S-TRP.

In the communication method provided in an embodiment of the present disclosure, the terminal capability includes a numeric count of MIMO layers supported by the terminal under an M-TRP that matches the transmission scheme.

In some embodiments, the numeric count of MIMO layers supported by the terminal under the M-TRP that matches the transmission scheme includes the maximum number of MIMO layers supported by the terminal in an SDM transmission, and/or the maximum number of MIMO layers supported by the terminal in an SFN transmission.

In an example, when the terminal supports the uplink ST×MP transmission, the terminal may report to the network device the maximum number of MIMO layers supported by the terminal in an SDM transmission. Alternatively, when the terminal supports the uplink ST×MP transmission, the terminal may report to the network device the maximum number of MIMO layers supported by the terminal in an SFN transmission. Alternatively, when the terminal supports the uplink ST×MP transmission, the terminal may simultaneously report to the network device the maximum number of MIMO layers supported by the terminal in an SDM transmission and the maximum number of MIMO layers supported by the terminal in an SFN transmission.

In the embodiments of the present disclosure, the terminal reports to the network device the numeric count of MIMO layers supported by the terminal under the M-TRP that matches the transmission scheme, and thus the network device may determine the situation suitable for the ST×MP transmission, thereby better supporting the network device to configure and schedule the transmission parameter, and ensuring the flexibility of the terminal, so that the PUSCH transmission supports higher transmission rate and throughput.

In the communication method provided in an embodiment of the present disclosure, the terminal capability includes a panel type supported by the terminal for the uplink ST×MP transmission.

In some embodiments, the panel type includes a symmetrical panel and/or an asymmetrical panel.

In an example, a symmetric panel transmission refers to a transmission based on a group of panels with the same panel capability among multiple panels of the terminal. The symmetric panels may be two panels with the same number of SRS ports, the same maximum number of data transmission layers, and the same transmission power.

In an example, an asymmetric panel transmission refers to a transmission based on a group of panels with different panel capabilities among multiple panels of the terminal. The asymmetric panels may be two panels with different numbers of SRS ports, and/or different maximum numbers of data transmission layers, and/or different transmission powers.

In an example, the terminal supports the capability of using symmetric panels for the ST×MP transmission, or the terminal supports the capability of using asymmetric panels for the ST×MP transmission, or the terminal supports the capability of using both symmetric panels and asymmetric panels for the ST×MP transmission.

In an example, the terminal capability reported by the terminal to the network device includes the panel type supported by the terminal for the ST×MP transmission. When determining that the terminal supports the uplink ST×MP transmission, the network device receives the terminal capability reported by the terminal. If it is determined that the terminal supports the capability of using symmetric panels for the ST×MP transmission, the network device configures the PUSCH transmission resource configuration parameters corresponding to the symmetric panels of the terminal. If it is determined that the terminal supports the capability of using asymmetric panels for the ST×MP transmission, the network device configures the PUSCH transmission resource configuration parameters corresponding to the asymmetric panels of the terminal. If it is determined that the terminal supports the capability of using both symmetric and asymmetric panels for the ST×MP transmission, the network device configures the PUSCH transmission resource configuration parameters corresponding to the symmetric and asymmetric panels of the terminal.

In the embodiments of the present disclosure, the terminal reports the terminal capability of the panel type supported by the terminal for the ST×MP transmission to the network device, and thus the network device indicates the terminal to dynamically switch between the M-TRP and the S-TRP by an SRS resource indication set, thereby realizing the indication schemes of different precoding indicators in different transmission modes, and ensuring the flexibility of the terminal, so that the PUSCH transmission supports higher transmission rate and throughput.

In the communication method provided in an embodiment of the present disclosure, the terminal capability includes a resource allocation mode between different uplink shared channels supported by the terminal in a case of an M-TRP communication.

In some embodiments, the resource allocation mode includes a mode in which resources completely overlap in a time domain in a case where the terminal supports the M-TRP communication, and/or a mode in which resources partially overlap in a time domain in a case where the terminal supports the M-TRP communication.

In an example, when resources completely overlap in the time domain, the terminal allocates power among panels actually used for the transmission. When resources do not overlap in the time domain, the terminal allocates full power to a panel actually used for the transmission.

In an example, when the terminal is currently suitable for the uplink ST×MP transmission and simultaneous scheduling, the terminal may report to the network device a mode in which resources completely overlap in the time domain when the terminal supports the M-TRP communication. Alternatively, when the terminal is currently suitable for the uplink ST×MP transmission and simultaneous scheduling, the terminal may report to the network device a mode in which resources partially overlap in the time domain when the terminal supports the M-TRP communication. Alternatively, when the terminal is currently suitable for the uplink ST×MP transmission and simultaneous scheduling, the terminal may report to the network device a mode in which resources completely overlap in the time domain when the terminal supports the M-TRP communication, and a mode in which resources partially overlap in the time domain when the terminal supports the M-TRP communication.

In the embodiments of the present disclosure, the terminal reports the resource allocation mode between different uplink shared channels supported by the terminal in case of the M-TRP communication to the network device, and thus the network device may determine the situation suitable for the ST×MP transmission, thereby better supporting the network device to configure and schedule the transmission resources, and ensuring the flexibility of the terminal, so that the PUSCH transmission supports higher transmission rate and throughput.

The present disclosure provides a communication method for reporting a terminal capability. By defining the terminal capability in an uplink PUSCH transmission and setting a relevant method for reporting the terminal capability, the network device may better configure and/or schedule a transmission parameter for the terminal, support a multi-panel transmission mechanism of the terminal, and ensure the flexibility of the terminal, thereby enabling the PUSCH transmission to support higher transmission rate and throughput.

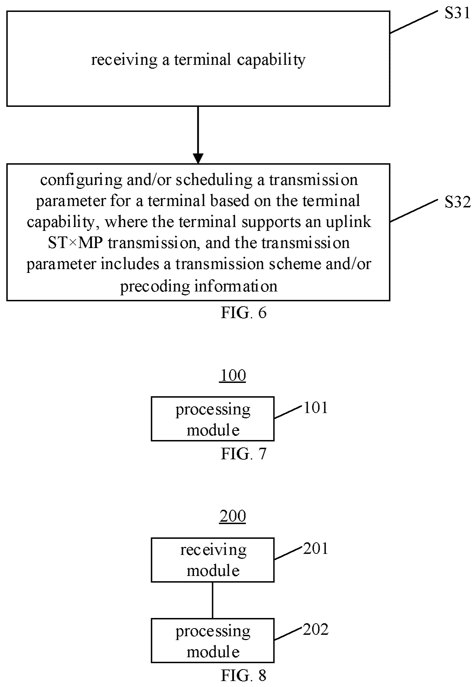

FIG. 6 is a flow chart illustrating a communication method according to an illustrative embodiment. As shown in FIG. 6, the communication method is performed by a network device, and includes the following steps.

At step S31, a terminal capability is received.

At step S32, a transmission parameter is configured and/or scheduled for a terminal based on the terminal capability, where the terminal supports an uplink ST×MP transmission, and the transmission parameter includes a transmission scheme and/or precoding information.

The transmission parameter includes a transmission scheme, and may also include precoding information. The transmission scheme includes a multi-panel/M-TRP transmission scheme, and may also include an S-TRP transmission scheme. The multi-panel/M-TRP transmission scheme includes an SDM transmission scheme or an SFN transmission scheme. The precoding information may include a TPMI and/or SRI.

In an example, the terminal capability may be used by the network device to configure the transmission parameter for the terminal, may be used by the network device to schedule the transmission parameter for the terminal, and may also be used by the network device to simultaneously configure the transmission parameter and schedule the transmission parameter for the terminal. For example, the terminal capability is used by the network device to configure a transmission scheme for the terminal, or to configure precoding information for the terminal, or to configure a transmission scheme and precoding information for the terminal. Alternatively, the terminal capability is used by the network device to schedule a transmission scheme for the terminal, or to schedule precoding information for the terminal, or to schedule a transmission scheme and precoding information for the terminal. Alternatively, the terminal capability is used by the network device to configure a transmission scheme and schedule a transmission scheme for the terminal, or to configure precoding information and schedule precoding information for the terminal.

In an example, the network device receives the terminal capability reported by the terminal. After receiving the terminal capability, the network device directly or indirectly indicates a related transmission based on the reported terminal capability. The related transmission includes specific beam indication information of the terminal, the number of transmission data layers used for the transmission, the allocation of DMRS ports used, precoding indication information, and the like.

In the communication method provided in an embodiment of the present disclosure, the terminal capability includes a numeric count of panels supported by the terminal.

In some embodiments, the numeric count of panels supported by the terminal includes a maximum number of panels supported by the terminal for simultaneous activation, and/or a maximum number of panels supported by the terminal for the uplink ST×MP transmission.

In an example, the network device receives the maximum number of panels supported by the terminal for simultaneous activation that is reported by the terminal, so that the network device may determine the panels that may be activated when performing the PUSCH communication. Alternatively, the network device receives the maximum number of panels supported by the terminal for the uplink ST×MP transmission that is reported by the terminal, so that the network device may determine the panels that may be used for the uplink simultaneous transmission when performing the PUSCH communication. Alternatively, the network device receives the maximum number of panels supported by the terminal for simultaneous activation and the maximum number of panels supported by the terminal for the uplink ST×MP transmission that are reported by the terminal, so that the network device may distinguish between panels that are only suitable for receiving data, panels that are only suitable for sending data, and panels that are suitable for receiving and sending data when performing the PUSCH communication, and determine the combination of multiple panels that may be used.

In an example, when it is configured that the maximum number of panels supported by the terminal is 4, and the number of panels actually supported by the terminal for simultaneous activation is 2, the network device receives the number of panels currently supported for simultaneous activation being 2 that is reported by the terminal.

In an example, when it is configured that the maximum number of panels supported by the terminal is 4, and the maximum number of panels actually supported by the terminal for the ST×MP transmission is 1, the network device receives the maximum number of panels currently supported for the ST×MP transmission being 1 that is reported by the terminal.

In an example, when it is configured that the maximum number of panels supported by the terminal is 4, the number of panels actually supported by the terminal for simultaneous activation is 2, and the maximum number of panels actually supported by the terminal for the ST×MP transmission is 1, the network device receives the number of panels currently supported for simultaneous activation being 2 and the maximum number of panels currently supported for the ST×MP transmission being 1 that are reported by the terminal.

In the embodiments of the present disclosure, the network device receives the number of panels supported by the terminal that is reported by the terminal, thus determining the combination of multiple panels suitable for the ST×MP transmission, better configuring or scheduling the transmission parameter, and ensuring the flexibility of the terminal, so that the PUSCH transmission supports higher transmission rate and throughput.

In the communication method provided in an embodiment of the present disclosure, the terminal capability includes a numeric count of MIMO layers supported by the terminal for a communication based on an S-TRP.

In some embodiments, the numeric count of MIMO layers includes a maximum number of MIMO layers supported by the terminal for the communication based on the S-TRP, and/or a minimum number of MIMO layers supported by the terminal for the communication based on the S-TRP.

In an example, the network device receives the maximum number of MIMO layers supported by the terminal for the communication based on the S-TRP that is reported by the terminal. Alternatively, the network device receives the minimum number of MIMO layers supported by the terminal for the communication based on the S-TRP that is reported by the terminal. Alternatively, the network device receives the maximum number of MIMO layers and the minimum number of MIMO layers supported by the terminal for the communication based on the S-TRP that are reported by the terminal.

In an example, if the maximum number of MIMO layers supported by the terminal for the communication based on the S-TRP is 2, 3 or 4, the network device receives the maximum number of MIMO layers supported by the terminal for the communication based on the S-TRP being 4 that is reported by the terminal. Alternatively, the network device receives the minimum number of MIMO layers supported by the terminal for the communication based on the S-TRP being 2 that is reported by the terminal. Alternatively, the network device simultaneously receives the maximum number of MIMO layers supported by the terminal for the communication based on the S-TRP being 4 and the minimum number of MIMO layers being 2 that are reported by the terminal.

In other embodiments, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an example, the network device receives the maximum number of MIMO layers supported by a corresponding panel of the terminal for the communication based on the S-TRP that is reported by the terminal. Alternatively, the network device receives the minimum number of MIMO layers supported by a corresponding panel of the terminal for the communication based on the S-TRP that is reported by the terminal. Alternatively, the network device simultaneously receives the maximum number of MIMO layers supported by a corresponding panel of the terminal for the communication based on the S-TRP and the minimum number of MIMO layers supported by a corresponding panel of the terminal for the communication based on the S-TRP that are reported by the terminal.

In an example, if the number of MIMO layers simultaneously supported by a corresponding panel of the terminal for the communication based on the S-TRP is 2, 3 or 4, the network device receives the maximum number of MIMO layers supported by the corresponding panel of the terminal for the communication based on the S-TRP being 4 that is reported by the terminal. Alternatively, the network device receives the minimum number of MIMO layers supported by the corresponding panel of the terminal for the communication based on the S-TRP being 2 that is reported by the terminal. Alternatively, the network device simultaneously receives the maximum number of MIMO layers supported by the corresponding panel of the terminal for the communication based on the S-TRP being 4 and the minimum number of MIMO layers supported by the corresponding panel of the terminal for the communication based on the S-TRP being 2 that are reported by the terminal.

In yet other embodiments, the numeric count of MIMO layers includes at least one of: the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, or the minimum number of MIMO layers supported by the corresponding panel of the terminal for the communication based on the S-TRP.

For example, the numeric count of MIMO layers includes the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, and the minimum number of MIMO layers supported by the corresponding panel of the terminal for the communication based on the S-TRP.

Alternatively, for example, the numeric count of MIMO layers includes the maximum number of MIMO layers supported by the terminal for the communication based on the S-TRP, and the maximum number of MIMO layers supported by the corresponding panel of the terminal for the communication based on the S-TRP.

Still alternatively, for example, the numeric count of MIMO layers includes the minimum number of MIMO layers supported by the terminal for the communication based on the S-TRP, and the minimum number of MIMO layers supported by the corresponding panel of the terminal for the communication based on the S-TRP.

The above is only an illustrative explanation. In the embodiments of the present disclosure, the numeric count of MIMO layers may include one or a combination of more of the maximum number of MIMO layers supported by the terminal for the communication based on the S-TRP, the minimum number of MIMO layers supported by the terminal for the communication based on the S-TRP, the maximum number of MIMO layers supported by the corresponding panel of the terminal for the communication based on the S-TRP, and the minimum number of MIMO layers supported by the corresponding panel of the terminal for the communication based on the S-TRP mentioned above, which are not listed one by one here.

In the embodiments of the present disclosure, the network device receives the numeric count of MIMO layers supported by the terminal that is reported by the terminal, thus determining the situation suitable for the ST×MP transmission, and better configuring and scheduling the transmission parameter, so that the PUSCH transmission supports higher transmission rate and throughput.

In the communication method provided in an embodiment of the present disclosure, the terminal capability includes a numeric count of MIMO layers supported by the terminal under an M-TRP that matches the transmission scheme.

In some embodiments, the numeric count of MIMO layers supported by the terminal under the M-TRP that matches the transmission scheme includes the maximum number of MIMO layers supported by the terminal in an SDM transmission, and/or the maximum number of MIMO layers supported by the terminal in an SFN transmission.

In an example, the network device receives the maximum number of MIMO layers supported by the terminal in an SDM transmission that is reported by the terminal. Alternatively, the network device receives the maximum number of MIMO layers supported by the terminal in an SFN transmission that is reported by the terminal. Alternatively, the network device receives the maximum number of MIMO layers supported by the terminal in an SDM transmission and the maximum number of MIMO layers supported by the terminal in an SFN transmission that are reported by the terminal.

In the embodiments of the present disclosure, the network device receives the numeric count of MIMO layers supported by the terminal under the M-TRP that matches the transmission scheme which is reported by the terminal, and thus the network device may determine the situation suitable for the ST×MP transmission, thereby better supporting the network device to configure and schedule the transmission parameter, so that the PUSCH transmission supports higher transmission rate and throughput.

In the communication method provided in an embodiment of the present disclosure, the terminal capability includes a panel type supported by the terminal for the uplink ST×MP transmission.

In some embodiments, the panel type includes a symmetrical panel and/or an asymmetrical panel.

In an example, a symmetric panel transmission refers to a transmission based on a group of panels with the same panel capability among multiple panels of the terminal. The symmetric panels may be two panels with the same number of SRS ports, the same maximum number of data transmission layers, and the same transmission power.

In an example, an asymmetric panel transmission refers to a transmission based on a group of panels with different panel capabilities among multiple panels of the terminal. The asymmetric panels may be two panels with different numbers of SRS ports, and/or different maximum numbers of data transmission layers, and/or different transmission powers.

In an example, the terminal supports the capability of using symmetric panels for the ST×MP transmission, or the terminal supports the capability of using asymmetric panels for the ST×MP transmission, or the terminal supports the capability of using both symmetric panels and asymmetric panels for the ST×MP transmission.

In an example, the terminal capability that is reported by the terminal and received by the network device includes the panel type supported by the terminal for the ST×MP transmission. If it is determined that the terminal supports the capability of using symmetric panels for the ST×MP transmission, the network device configures the PUSCH transmission resource configuration parameters corresponding to the symmetric panels of the terminal. If it is determined that the terminal supports the capability of using asymmetric panels for the ST×MP transmission, the network device configures the PUSCH transmission resource configuration parameters corresponding to the asymmetric panels of the terminal. If it is determined that the terminal supports the capability of using both symmetric and asymmetric panels for the ST×MP transmission, the network device configures the PUSCH transmission resource configuration parameters corresponding to the symmetric and asymmetric panels of the terminal.

In the embodiments of the present disclosure, the network device receives the terminal capability of the panel type supported by the terminal for the ST×MP transmission that is reported by the terminal, and thus the network device indicates the terminal to dynamically switch between the M-TRP and the S-TRP by an SRS resource indication set, thereby realizing the indication schemes of different precoding indicators in different transmission modes, so that the PUSCH transmission supports higher transmission rate and throughput.

In the communication method provided in an embodiment of the present disclosure, the terminal capability includes a resource allocation mode between different uplink shared channels supported by the terminal in a case of an M-TRP communication.

In some embodiments, the resource allocation mode includes a mode in which resources completely overlap in a time domain in a case where the terminal supports the M-TRP communication, and/or a mode in which resources partially overlap in a time domain in a case where the terminal supports the M-TRP communication.

In an example, when resources completely overlap in the time domain, the terminal allocates power among panels actually used for the transmission. When resources do not overlap in the time domain, the terminal allocates full power to a panel actually used for the transmission.

In an example, the network device receives a mode in which resources completely overlap in the time domain when the terminal supports the M-TRP communication that is reported by the terminal. Alternatively, the network device receives a mode in which resources partially overlap in the time domain when the terminal supports the M-TRP communication that is reported by the terminal. Alternatively, the network device receives a mode in which resources completely overlap in the time domain when the terminal supports the M-TRP communication, and a mode in which resources partially overlap in the time domain when the terminal supports the M-TRP communication, that are reported by the terminal.

In the embodiments of the present disclosure, the network device receives the resource allocation mode between different uplink shared channels supported by the terminal in case of the M-TRP communication that is reported by the terminal, and thus the network device may determine the situation suitable for the ST×MP transmission, better configure and schedule the transmission parameter, and ensure the flexibility of the terminal, so that the PUSCH transmission supports higher transmission rate and throughput.

The present disclosure provides a communication method. By defining the terminal capability in an uplink PUSCH transmission and setting a relevant method for reporting the terminal capability, the network device may receive the terminal capability, better configure and/or schedule a transmission parameter for the terminal, and support a multi-panel transmission mechanism of the terminal, thereby enabling the PUSCH transmission to support higher transmission rate and throughput.

It may be understood that the technical implementations involved in the process of performing the communication method by the network device in the embodiments of the present disclosure may be applied to the process of performing the communication method by the terminal in the embodiments of the present disclosure. Therefore, for some technical implementations of the process of performing the communication method by the network device that are not described in detail, reference may be to the relevant description of the implementation process of performing the communication method by the terminal, which will not be elaborated here.

It may be understood that the communication method provided in the embodiments of the present disclosure is applicable to the process of interaction between the terminal and the network device to implement the communication method. The process of interaction between the terminal and the network device to implement the communication method will not be described in detail in the embodiments of the present disclosure.

It should be noted that those skilled in the art will appreciate that the various implementations/examples in the above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it may be understood by those skilled in the art that such illustrations are not intended to limit the embodiments of the present disclosure.

FIG. 7 is a block diagram illustrating a communication apparatus 100 according to an illustrative embodiment. Referring to FIG. 7, the communication apparatus 100 includes a processing module 101.

The processing module 101 is configured to report a terminal capability, where the terminal supports an uplink ST×MP transmission, the terminal capability is used by a network device to configure and/or schedule a transmission parameter for the terminal, and the transmission parameter includes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of MIMO layers supported by the terminal for a communication based on an S-TRP.

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, before reporting the terminal capability, the method further includes: determining that a maximum number of SRS ports corresponding to the corresponding panel of the terminal for the communication based on the S-TRP is inconsistent with a maximum number of transmission data layers corresponding to the panel.

In an implementation, the terminal capability includes a numeric count of MIMO layers supported by the terminal under an M-TRP that matches the transmission scheme.

In an implementation, the numeric count of MIMO layers supported by the terminal under the M-TRP that matches the transmission scheme includes a maximum number of MIMO layers supported by the terminal in an SDM transmission, and/or a maximum number of MIMO layers supported by the terminal in an SFN transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

FIG. 8 is a block diagram illustrating a communication apparatus 200 according to an illustrative embodiment. Referring to FIG. 8, the communication apparatus 200 includes a receiving module 201 and a processing module 202.

The receiving module 201 is configured to receive a terminal capability. The processing module 202 is configured to configure and/or schedule a transmission parameter for a terminal based on the terminal capability, where the terminal supports an uplink ST×MP transmission, and the transmission parameter includes a transmission scheme and/or precoding information.

In an implementation, the terminal capability includes a numeric count of panels supported by the terminal.

In an implementation, the numeric count of panels supported by the terminal includes a maximum number of panels supported by the terminal for simultaneous activation, and/or a maximum number of panels supported by the terminal for the uplink ST×MP transmission.

In an implementation, the terminal capability includes a numeric count of MIMO layers supported by the terminal for a communication based on an S-TRP.

In an implementation, the numeric count of MIMO layers includes a maximum number of MIMO layers supported by the terminal for the communication based on the S-TRP, and/or a minimum number of MIMO layers supported by the terminal for the communication based on the S-TRP.

In an implementation, the numeric count of MIMO layers includes a maximum number of MIMO layers supported by a corresponding panel of the terminal for the communication based on the S-TRP, and/or a minimum number of MIMO layers supported by a corresponding panel of the terminal for the communication based on the S-TRP.

In an implementation, the terminal capability includes a numeric count of MIMO layers supported by the terminal under an M-TRP that matches the transmission scheme.

In an implementation, the numeric count of MIMO layers supported by the terminal under the M-TRP that matches the transmission scheme includes a maximum number of MIMO layers supported by the terminal in an SDM transmission, and/or a maximum number of MIMO layers supported by the terminal in an SFN transmission.

In an implementation, the terminal capability includes a panel type supported by the terminal for the uplink ST×MP transmission.

In an implementation, the panel type includes a symmetrical panel and/or an asymmetrical panel.

In an implementation, the terminal capability includes a resource allocation mode between different uplink shared channels supported by the terminal in a case of an M-TRP communication.

In an implementation, the resource allocation mode includes a mode in which resources completely overlap in a time domain in a case where the terminal supports the M-TRP communication, and/or a mode in which resources partially overlap in a time domain in a case where the terminal supports the M-TRP communication.

With respect to the apparatus in the above embodiments, the specific manners for performing operations for individual modules therein have been described in detail in the embodiments regarding the method, which will not be elaborated herein.

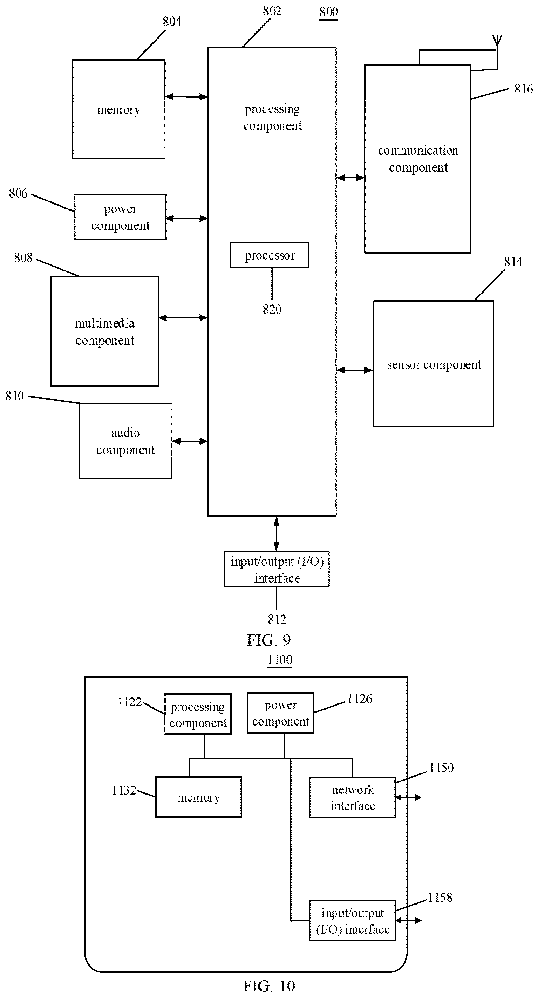

FIG. 9 is a block diagram illustrating a communication device 800 according to an illustrative embodiment. For example, the communication device 800 may be a mobile phone, a computer, a digital broadcast terminal, a messaging device, a game console, a tablet device, a medical device, a fitness device, a personal digital assistant, or the like.

Referring to FIG. 9, the communication device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the communication device 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the communication device 800. Examples of such data include instructions for any applications or methods operated on the communication device 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the communication device 800. The power component 806 may include a power management system, one or more power sources, and any other components associated with the generation, management, and distribution of power in the communication device 800.

The multimedia component 808 includes a screen providing an output interface between the communication device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the communication device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the communication device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the communication device 800. For instance, the sensor component 814 may detect an open/closed status of the communication device 800, relative positioning of components, e.g., the display and the keypad, of the communication device 800, a change in position of the communication device 800 or a component of the communication device 800, a presence or absence of user contact with the communication device 800, an orientation or an acceleration/deceleration of the communication device 800, and a change in temperature of the communication device 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the communication device 800 and other devices. The communication device 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the communication device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 804, executable by the processor 820 in the communication device 800, for completing the above-mentioned methods. For example, the non-transitory computer-readable storage medium may be a ROM, a random access memory (RAM), a CD-ROM, a magnetic tape, a floppy disc, an optical data storage device, and the like.

FIG. 10 is a block diagram illustrating a communication device 1100 according to an illustrative embodiment. For example, the communication device 1100 may be provided as a network device. Referring to FIG. 10, the communication device 1100 includes a processing component 1122 and a memory resource represented by a memory 1132. The processing component 1122 may further include one or more processors. The memory 1132 is configured to store instructions executable by the processing component 1122, such as an application program. The application program stored in the memory 1132 may include one or more modules each corresponding to a set of instructions. In addition, the processing component 1122 is configured to execute the instructions to perform the above-mentioned methods.

The communication device 1100 further includes a power component 1126 configured to perform a power management on the communication device 1100, a wired or wireless network interface 1150 configured to connect the communication device 1100 to the network, and an input/output (I/O) interface 1158. The communication device 1100 may operate an operating system stored in the memory 1132, such as Windows Server^{™}, Mac OS X^{™}, Unix^{™}, Linux^{™}, Free BSD^{™}, or the like.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A communication method, performed by a terminal and comprising:
reporting a terminal capability, wherein the terminal supports an uplink simultaneous transmission via multi-panels (ST×MP transmission), the terminal capability is used by a network device to configure and/or schedule a transmission parameter for the terminal, and the transmission parameter comprises a transmission scheme and/or precoding information.

2. The method according to claim 1, wherein the terminal capability comprises a numeric count of panels supported by the terminal.

3. The method according to claim 2, wherein the numeric count of panels supported by the terminal comprises a maximum number of panels supported by the terminal for simultaneous activation, and/or a maximum number of panels supported by the terminal for the uplink ST×MP transmission.

4. The method according to claim 1, wherein the terminal capability comprises a numeric count of multiple-input multiple-output (MIMO) layers supported by the terminal for a communication based on a single-transmission reception point (S-TRP).

5. The method according to claim 4, wherein the numeric count of MIMO layers comprises a maximum number of MIMO layers supported by the terminal for the communication based on the S-TRP, and/or a minimum number of MIMO layers supported by the terminal for the communication based on the S-TRP.

6. The method according to claim 4 or 5, wherein the numeric count of MIMO layers comprises a maximum number of MIMO layers supported by a corresponding panel of the terminal for the communication based on the S-TRP, and/or a minimum number of MIMO layers supported by a corresponding panel of the terminal for the communication based on the S-TRP.

7. The method according to claim 6, before reporting the terminal capability, further comprising:
determining that a maximum number of sounding reference signal (SRS) ports corresponding to the corresponding panel of the terminal for the communication based on the S-TRP is inconsistent with a maximum number of transmission data layers corresponding to the panel.

8. The method according to claim 1, wherein the terminal capability comprises a numeric count of MIMO layers supported by the terminal under a multiple-transmission reception point (M-TRP) that matches the transmission scheme.

9. The method according to claim 8, wherein the numeric count of MIMO layers supported by the terminal under the M-TRP that matches the transmission scheme comprises a maximum number of MIMO layers supported by the terminal in a space division multiplexing (SDM) transmission, and/or a maximum number of MIMO layers supported by the terminal in a single frequency network (SFN) transmission.

10. The method according to claim 1, wherein the terminal capability comprises a panel type supported by the terminal for the uplink ST×MP transmission.

11. The method according to claim 10, wherein the panel type comprises a symmetrical panel and/or an asymmetrical panel.

12. The method according to claim 1, wherein the terminal capability comprises a resource allocation mode between different uplink shared channels supported by the terminal in a case of an M-TRP communication.

13. The method according to claim 12, wherein the resource allocation mode comprises a mode in which resources completely overlap in a time domain in a case where the terminal supports the M-TRP communication, and/or a mode in which resources partially overlap in a time domain in a case where the terminal supports the M-TRP communication.

14. A communication method, performed by a network device and comprising:
receiving a terminal capability; and
configuring and/or scheduling a transmission parameter for a terminal based on the terminal capability, wherein the terminal supports an uplink simultaneous transmission via multi-panels (ST×MP transmission), and the transmission parameter comprises a transmission scheme and/or precoding information.

15. The method according to claim 14, wherein the terminal capability comprises a numeric count of panels supported by the terminal.

16. The method according to claim 15, wherein the numeric count of panels supported by the terminal comprises a maximum number of panels supported by the terminal for simultaneous activation, and/or a maximum number of panels supported by the terminal for the uplink ST×MP transmission.

17. The method according to claim 14, wherein the terminal capability comprises a numeric count of multiple-input multiple-output (MIMO) layers supported by the terminal for a communication based on a single-transmission reception point (S-TRP).

18. The method according to claim 17, wherein the numeric count of MIMO layers comprises a maximum number of MIMO layers supported by the terminal for the communication based on the S-TRP, and/or a minimum number of MIMO layers supported by the terminal for the communication based on the S-TRP.

19. The method according to claim 17 or 18, wherein the numeric count of MIMO layers comprises a maximum number of MIMO layers supported by a corresponding panel of the terminal for the communication based on the S-TRP, and/or a minimum number of MIMO layers supported by a corresponding panel of the terminal for the communication based on the S-TRP.

20. The method according to claim 14, wherein the terminal capability comprises a numeric count of MIMO layers supported by the terminal under a multiple-transmission reception point (M-TRP) that matches the transmission scheme.

21. The method according to claim 20, wherein the numeric count of MIMO layers supported by the terminal under the M-TRP that matches the transmission scheme comprises a maximum number of MIMO layers supported by the terminal in a space division multiplexing (SDM) transmission, and/or a maximum number of MIMO layers supported by the terminal in a single frequency network (SFN) transmission.

22. The method according to claim 14, wherein the terminal capability comprises a panel type supported by the terminal for the uplink ST×MP transmission.

23. The method according to claim 22, wherein the panel type comprises a symmetrical panel and/or an asymmetrical panel.

24. The method according to claim 14, wherein the terminal capability comprises a resource allocation mode between different uplink shared channels supported by the terminal in a case of an M-TRP communication.

25. The method according to claim 24, wherein the resource allocation mode comprises a mode in which resources completely overlap in a time domain in a case where the terminal supports the M-TRP communication, and/or a mode in which resources partially overlap in a time domain in a case where the terminal supports the M-TRP communication.

26. A communication apparatus, configured in a terminal and comprising:
a sending module configured to report a terminal capability, wherein the terminal supports an uplink simultaneous transmission via multi-panels (ST×MP transmission), the terminal capability is used by a network device to configure and/or schedule a transmission parameter for the terminal, and the transmission parameter comprises a transmission scheme and/or precoding information.

27. A communication apparatus, configured in a network device and comprising:
a receiving module configured to receive a terminal capability; and
a processing module configured to configure and/or schedule a transmission parameter for a terminal based on the terminal capability, wherein the terminal supports an uplink simultaneous transmission via multi-panels (ST×MP transmission), and the transmission parameter comprises a transmission scheme and/or precoding information.

28. A communication device, configured in a terminal and comprising:
a processor; and
a memory for storing instructions executable by the processor,
wherein the processor is configured to perform the method according to any one of claims 1 to 13.

29. A communication device, configured in a network device and comprising:
a processor; and
a memory for storing instructions executable by the processor,
wherein the processor is configured to perform the method according to any one of claims 14 to 25.

30. A storage medium having stored therein instructions that, when executed by a processor of a terminal, cause the terminal to perform the method according to any one of claims 1 to 13.

31. A storage medium having stored therein instructions that, when executed by a processor of a network device, cause the network device to perform the method according to any one of claims 14 to 25.
